# EUROPEAN PATENT APPLICATION

(11) **EP 0 772 021 A2**
(43) Date of publication of application: **07.05.1997**
(21) Application number: 96307805.0
(22) Date of filing: 29.10.1996
(51) Int. Cl.: F28F 27/00, F28C 1/04

(54) **Cooling towers**

(30) Priority: 30.10.1995 JP 281611/95
(71) Applicant: ISHIKAWAJIMA-HARIMA JUKOGYO KABUSHIKI KAISHA, Chiyoda-ku Tokyo-to (JP)
(72) Inventor: Kato, Kanji, Chiba-shi, Chiba-ken (JP); Watanabe, Hiroshi, Yotsukaido-shi, Chiba-ken (JP)
(74) Representative: Jennings, Nigel Robin

(57) **Abstract**

A cooling tower for cooling a liquid includes a cooling fan (4) arranged to pass air through the cooling tower, hydraulic motor (12) connected to rotate the fan, a pump (14), which is operated by a motor (13) and is connected to the hydraulic motor via a hydraulic supply line (18A) which includes a flow control valve (16), a temperature detector (20) for detecting the temperature of the liquid cooled within the cooling tower and a controller (24) arranged to compare the detected temperature with a predetermined temperature and to control the flow control valve in dependence on the difference between the detected and predetermined temperatures. The pump (14) is of variable capacity type and a capacity regulator (25) is associated with the pump (14) and arranged to vary the capacity of the pump to maintain a predetermined pressure differential between the pressures on the upstream and downstream sides of the flow control valve (16).

## Description

The present invention relates generally to cooling towers and specifically to a system for controlling the hydraulic drive or motor of a hydraulically driven cooling fan in a cooling tower.

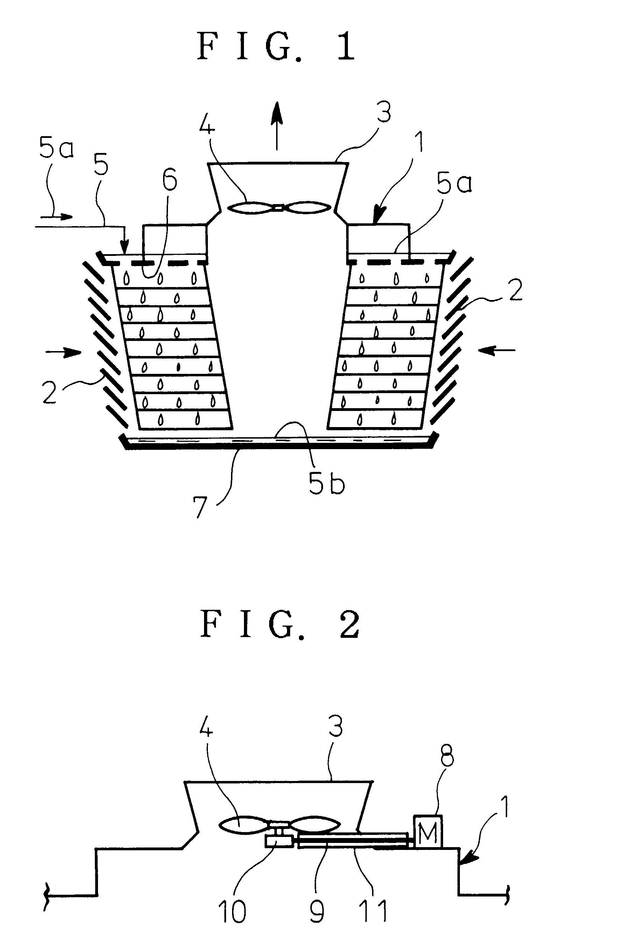

Figures 1 and 2 are diagrammatic side views of a known cooling tower for cooling warm water and of the drive for the cooling fan in the tower of Figure 1, respectively. Air suction passages defined by louver surfaces 2 are provided in the sides of the cooling tower main body 1. A cooling fan 4 for circulating air is installed in the air outlet 3 at the centre of the top of the main body 1. The fan 4 is driven to cause atmospheric air to flow through the air suction passages and the air passes through regulated passages in the main body 1 and is discharged through the outlet 3 to the atmosphere. A perforated warm-water receiver 6 is installed on the top of the main body 1 and receives warm water 5a from a supply line 5 constituting the medium to be cooled. The receiver 6 allows the warm water to flow down through the regulated passages. The warm water 5a, which continuously flows down, comes into direct contact with the atmospheric air introduced through the air suction passages, and chilled water 5b is collected in a chilled water receptacle 7.

For the purpose of driving the cooling fan of the cooling tower, an electric motor 8 is generally installed on the top of the main body 1, as shown in Figure 2, and a drive shaft 9 connected to the motor 8 extends into the main body 1 and transmits motive power to the cooling fan 4 via a speed reducer 10. A common mechanical support or bed supports the motor and the associated speed reducer, fan and shaft. The cooling fan 4 is of electrical motor-driven type and is generally driven with a blade tip speed of no more than 60 m/s.

Though a single-speed motor is generally employed for driving the cooling fan, for the purpose of energy saving a pole change type (two-speed) motor may be used for operation at 50% or 100% of maximum speed; alternatively, a motor with an inverter may be utilized for operation at a variable speed of 50% to 100% of maximum speed.

However, there are problems in that a high starting current is taken by the motor since the cooling fan 4 is very heavy and is driven only by the motor 8, and that much labour and time are required for maintenance and inspection since the motor 8 and the speed reducer 10 are installed at the top of the main body 1.

In order to solve the above problems JP-A-59-30046 (JP-B-60-174500) of the present applicant, on which the precharacterising portion of Claim 1 is based, proposed that the cooling fan be driven by a hydraulic motor which in turn is operated by pressurised oil supplied by a hydraulic pump via a directional control valve. The hydraulic pump is driven by an electric motor and the directional control valve is controlled by electric signals.

The construction of the prior document enables the hydraulic motor to be driven both in the normal and reverse directions and to be operated at a speed of 0 to 100% of maximum speed. It also enables the electric motor and the hydraulic pump to be installed at ground level, which facilitates maintenance and inspection. Further, only a relatively low starting current is taken since the electric motor is used only to drive the hydraulic pump.

However, in the prior construction, the output pressure of the hydraulic pump must be set to a value producing the maximum load torque which may be required during the year. Liquid discharged from the hydraulic pump is always at the above-mentioned maximum pressure, though its flow rate is automatically controlled to the required quantity of liquid passing through the directional control valve. Accordingly, when a lower load pressure at the hydraulic motor is acceptable or when a lower rotary speed of the cooling fan will suffice due to a reduced cooling requirement because of lower ambient air temperature in winter or the like, there is great difference between the pressure of the hydraulic pump for the maximum load torque condition and the lower load pressure actually required for the hydraulic motor which leads to pressure losses, resulting in energy losses.

Accordingly, it is the object of the present invention to provide a cooling tower with a cooling fan driven by a hydraulic drive or motor with a control system which ensures that the hydraulic pressure provided by the hydraulic pump is never substantially greater than that required to rotate the fan at the speed which is necessary to satisfy the actual cooling requirement thereby resulting in an energy saving.

According to the present invention a cooling tower for cooling a liquid including a cooling fan arranged to pass air through the cooling tower, a hydraulic motor connected to operate the fan, a pump, which is operated by a motor and is connected to the hydraulic motor via a hydraulic supply line which includes a flow control valve, a temperature detector for detecting the temperature of the liquid cooled within the cooling tower and a controller arranged to compare the detected temperature with a predetermined temperature and to control the flow control valve in dependence on the difference between the detected and predetermined temperatures is characterised in that the pump is of variable capacity type and that a capacity regulator is associated with the pump and arranged to vary the capacity of the pump to maintain a predetermined pressure differential between the pressures on the upstream and downstream sides of the flow control valve.

Thus in the cooling tower in accordance with the present invention the flow control valve in the supply line to the hydraulic motor is controlled in the usual manner, that is to say in dependence on the difference between the temperature of the cooled liquid and a predetermined reference temperature and the pressure drop across the flow control valve is controlled to be substantially at a predetermined value, such that the pressure on the upstream side is slightly higher than the pressure on the downstream side. This enables the discharge pressure of the hydraulic pump to be maintained at a minimum value which is consistent with the cooling fan providing the cooling that is necessary and thus in a reduction in the power consumed by the hydraulic pump.

Further features and details of the invention will be apparent from the following description of certain specific embodiments which is given by way of example only with reference to Figures 3 to 9 of the accompanying diagrammatic drawings, in which:
Figure 3 is a side view of a cooling tower with a fan with one embodiment of apparatus for controlling the hydraulic drive for the cooling fan according to the present invention;
Figure 4 is a block diagram of one example of a pressure-compensated variable capacity or displacement controller for use in the present invention;
Figures 5, 6 and 7 are schematic system diagrams of further embodiments of apparatus for controlling the hydraulic fan drive;
Figure 8 is a diagram showing the relationship between the speed of the cooling fan and the driving torque; and
Figure 9 is a diagram similar to Figures 5, 6 and 7 showing a yet further embodiment of apparatus for controlling the fan drive.

Those components which appear also in Figure 1 are referred to by the same reference numerals.

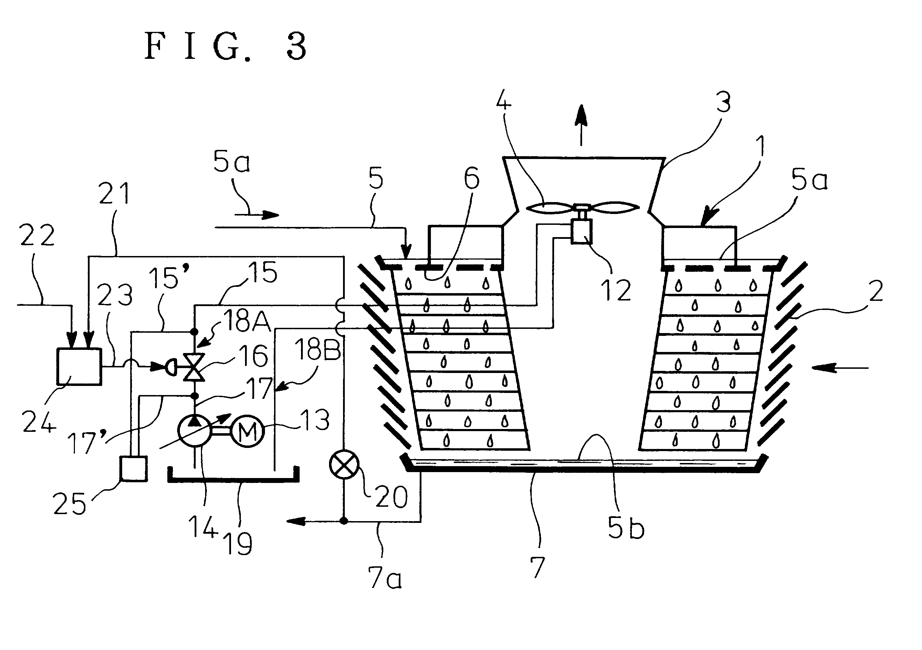

In Figure 3, the cooling fan 4 at the air outlet 3 at the top of the cooling tower main body 1 is connected to the output shaft of a hydraulic motor 12, and a variable capacity or variable displacement pump 14 driven by a motor 13 is installed on the ground surface. The supply side of the hydraulic motor 12 is connected to a flow control valve 16 (e.g. a known, proportional electromagnetic flow control valve) via a downstream side hydraulic pressure supply line 15, and the valve 16 is connected to the pump 14 via an upstream side hydraulic pressure supply line 17. The lines 15 and 17 together constitute a hydraulic pressure supply line 18A. The return side of the hydraulic motor 12 is connected to a tank 19 via a return line 18B so that the pressure liquid is returned to the suction side of the pump 14.

A temperature detector 20 is provided for detecting the temperature of the chilled water 5b in the chilled water receptacle 7 or chilled water 5b to be supplied to a predetermined location via a water supply line 7a. A controller 24 is provided for comparing temperature 21 detected by the detector 20 with a preset or reference temperature 22 and controls the degree of opening of the flow control valve 16 by means of a control signal 23 generated in dependence on the difference between the above temperature values.

Furthermore, the pump 14 is provided with a pressure-compensated variable capacity or variable displacement regulator 25 (pressure compensator).

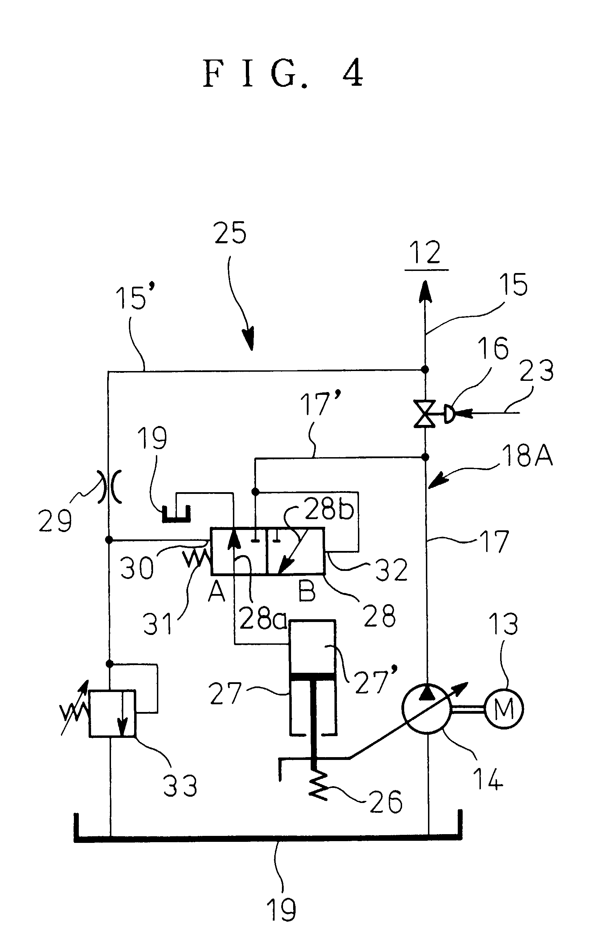

Figure 4 shows an example of the regulator 25, which comprises capacity increasing biasing means 26, such as a spring, for biasing the capacity of the pump 14 in the increasing direction, an actuator 27 with a liquid chamber 27' for actuation in a direction to decrease the capacity of the pump 14 against the action of the biasing means 26 and a control valve 28 for controlling operation of the actuator 27.

On one side, the capacity increasing side, A of the control valve 28, there are provided a low pressure port 30 connected via an orifice 29 to a branch line 15' of the downstream-side hydraulic pressure supply line 15 of the flow control valve 16 and a spring 31 for increasing the pressure of the port 30 as well as a port 28a for providing communication of the liquid chamber 27' of the actuator 27 with the tank 19. The spring 31 acts on the valve 28 and increases the force acting on the hydraulic fluid, thereby increasing the pressure at the port 30. On the other side, the capacity decreasing side, B of the control valve 28, there are provided a high pressure port 32 connected via a branch line 17' to the upstream side hydraulic pressure supply line 17 of the flow control valve 16 and a port 28b for applying the pressure of the branch line 17' to the liquid chamber 27' of the actuator 27. The capacity of the pump 14 is controlled via the actuator 27 such that the upstream side pressure of the flow control valve 16 is maintained at a value somewhat higher than the downstream-side pressure thereof.

More specifically, on the capacity increasing side A of the control valve 28, the hydraulic pressure on the downstream side of the flow control valve 16 is applied through the low pressure port 30, and the spring 31 is also provided. Hence, the flow control valve 28 is pushed by a pressure somewhat higher than the hydraulic pressure of the downstream side hydraulic pressure supply line 15. When this pushing force on the capacity increasing side A becomes equal to the pushing force on the capacity decreasing side B of the flow control valve 28 which is due to the hydraulic pressure on the upstream side of the flow control valve 16 applied through the high pressure port 32, (i.e. when the upstream side pressure is higher than the downstream side pressure by a preset pressure value set by the spring 31), the control valve 28 is balanced at an intermediate position where both the ports 28a and 28b are closed. In this case, force of the spring 31 is set or determined such that the difference between the hydraulic pressure on the upstream side of the flow control valve 16 and the hydraulic pressure on the downstream side is at an irreducible minimum value.

Downstream of the orifice 29 in the branch line 15', a maximum pressure setting valve 33 is provided. When the pressure in the supply line 15, which acts through the orifice 29, becomes higher than the preset pressure, the maximum pressure setting valve 33 is opened to the tank 19. As a result, the pressure downstream of the orifice 29, i.e. the pressure at the low pressure port 30, is reduced. The capacity decreasing side B of the control valve 28 is then opened, and the hydraulic pressure on the upstream side hydraulic pressure supply line 17 is supplied to actuating side of the actuator 27, and the actuator is extended. The capacity of the variable displacement pump 14 is thus decreased against the action of the biasing means 26, thereby ensuring safety of the system.

The mode of operation of the above embodiment will now be described.

In order to maintain the supply water temperature at a constant value, the temperature 21 of the chilled water 5b detected by the detector 20 in the supply water line 7a in Figure 3 is compared with the preset temperature 22 input into the controller 24, and the flow control valve 16 is controlled by the control signal 23. If the detected temperature 21 is higher than the preset temperature 22, the controller 24 opens the flow control valve 16 to increase the flow rate through the valve 16, whereby the speed of the cooling fan 4 driven by the hydraulic motor 12 is increased to enhance cooling of the warm water 5a. Thus, the temperature of the chilled water 5b is controlled to the preset temperature 22.

Conversely, if the detected temperature 21 of the chilled water 5b is lower than the preset temperature 22, the controller 24 acts to throttle the flow control valve 16 and reduces the flow rate in the valve 16. As a result, the speed of the cooling fan 5 driven by the hydraulic motor 12 is reduced. Thus, cooling of the warm water 5a is reduced and the temperature of the chilled water 5b is controlled up to the preset temperature 22. In this way, temperature of the supply water is always maintained at the preset temperature 22.

However, when the degree of opening of the flow control valve 16 is controlled as described above, the hydraulic pressure in the downstream side hydraulic pressure supply line 15 is changed by an increase or decrease of the pressure drop caused by flow through the flow control valve 16.

For example, in the balanced state where both the ports 28a and 28b of the control valve 28 in Figure 4 are closed, if the degree of opening of the flow control valve 16 is controlled to increase, the pressure drop across the flow control valve 16 decreases and the pressure on the downstream side increases. The pressure applied to the low pressure port 30 of the control valve 28 then increases also. As a result, the control valve 28 is controlled to open the port 28a on the capacity increasing side A. Accordingly, oil in the liquid chamber 27' of the actuator 27 is returned to the tank 19, and the actuator 27 is controlled to retract by the action of the biasing means 26. The variable displacement pump 14 is thus controlled to increase its capacity, and the pressure controlling the capacity increasing side A of the control valve 28 keeps in balance with the pressure controlling the capacity decreasing side B, and the system is brought to equilibrium.

In the state in which the control valve 28 is kept in balance, when the flow control valve 16 is controlled to throttle flow through it, the pressure drop across the flow control valve 16 increases and the pressure on the downstream side is reduced. The pressure applied to the low pressure port 30 of the control valve 28 then decreases and the pressure at the low pressure port 30 is reduced more than the pressure of the high pressure port 32. Thus, the control valve 28 is controlled to open the port 28b, and the hydraulic pressure in the upstream side hydraulic pressure supply line 17 upstream of the flow control valve 16 is supplied to the liquid chamber 27' of the actuator 27, and the actuator 27 is extended. The action of the capacity increasing biasing means 26 is consequently overcome and the capacity of the variable displacement pump 14 is reduced. As a result, the pressure at the low pressure port 30 of the control valve 28 keeps in balance with the pressure at the high pressure port 32, and the system is brought to equilibrium.

As described above, even when the degree of opening of the flow control valve 16 is changed, automatic control is performed at the irreducible minimum pressure difference at all times so that the upstream pressure is somewhat higher than the pressure on the downstream side of the flow control valve 16. Accordingly, the discharge pressure of the variable displacement pump 14 is always kept at the minimum level, and the pump 14 can be controlled to operate at the rate which is necessary for the degree of opening of the flow control valve 16, thus saving energy consumed by the motor 13.

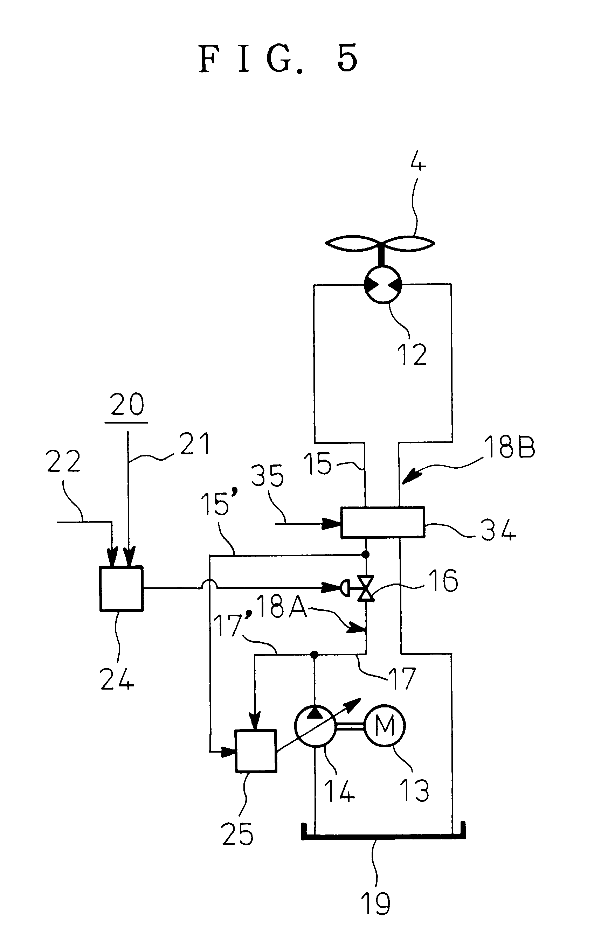

Figure 5 shows an embodiment in which a normal-reverse switching valve 34 is provided across the downstream side hydraulic pressure supply line 15 connected to the hydraulic motor 12 and the return line 18B. In winter season, for example, the louver surfaces 2 may be frozen up when cold air is introduced. However, if the normal-reverse switching valve 34 is switched over in the direction of arrow 35 manually or automatically to operate the cooling fan 4 in the reverse direction, warm air is blown out through the air suction passages thereby preventing freezing of the louver surfaces 2.

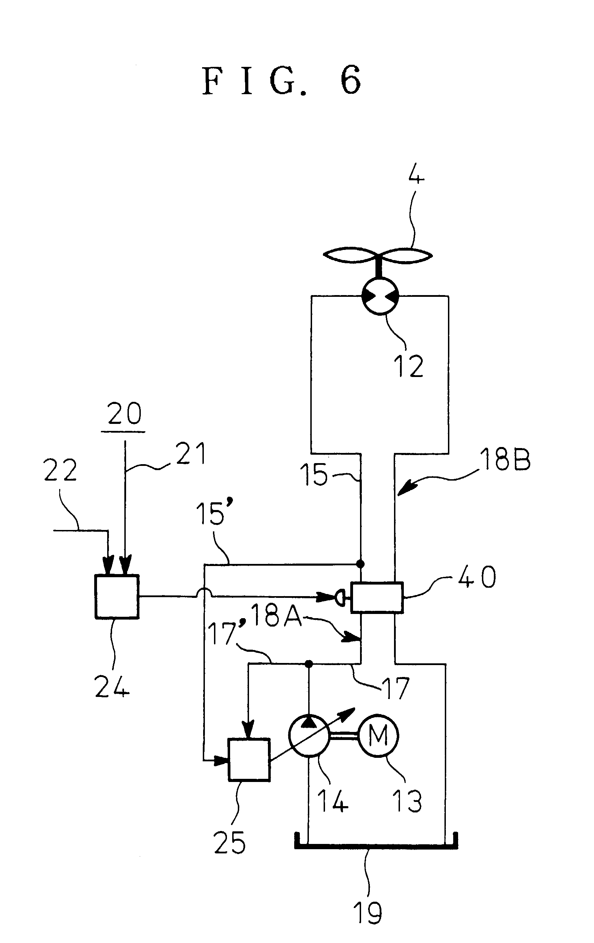

Figure 6 shows an embodiment in which a normal-reverse switching flow control valve 40 (e.g. a known, proportional electromagnetic directional flow control valve), which serves as both the flow control valve 16 and the normal-reverse switching valve 34 of Figure 5 is provided across the supply line 18A and the return line 18B, and is controlled by commands from the controller 24. The purpose and operation of this embodiment are the same as those of Figure 5.

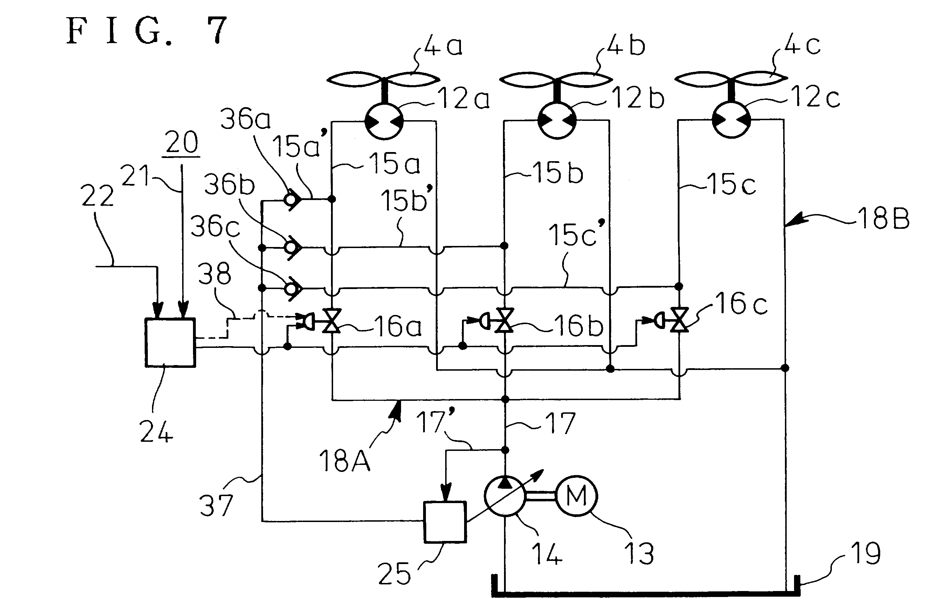

Figure 7 shows an embodiment in which a plurality of cooling fans, in this case three fans 4a, 4b and 4c, are provided which are driven by respective hydraulic motors 12a, 12b and 12c. In general, the same number of variable displacement pumps as hydraulic motors is installed to provide a hydraulic pressure circuit. In this case, flow control valves 16a, 16b and 16c are respectively arranged on the downstream side of the hydraulic pressure supply lines 15a, 15b and 15c, branching off from the upstream side of the hydraulic pressure supply line 17 supplied from a single variable displacement pump. Check valves 36a, 36b and 36c are respectively arranged in the outflow direction in the branch lines 15a', 15b' and 15c' connected to the downstream side of the flow control valves 16a, 16b and 16c. The outlets of the check valves 36a, 36b and 36c are connected to a pilot line 37 connected to the pressure-compensated variable displacement regulator 25; and the branch line 17' is connected to the regulator 25.

In the above arrangement, the highest hydraulic pressure in the three downstream side hydraulic pressure supply lines 15a, 15b and 15c is introduced into the pressure-compensated variable displacement regulator 25 as the pilot pressure, and the discharge pressure of the variable displacement pump 14 is controlled to a pressure value somewhat higher than the driving pressure of the hydraulic motor 12, which is the highest loading pressure.

In the case where three cooling fans 4a, 4b and 4c are provided, as shown in Figure 7, when the speed of the cooling fans 4a, 4b and 4c is reduced due to low ambient air temperature, the efficiency of the hydraulic pressure circuit decreases. If the design is such that, when the speed is reduced to a certain value, e.g. when the detected temperature 21 is lower than a temperature level at which temperature control may be effected adequately by stopping one of the cooling fans, a stop signal 38 is issued to, say, the flow control valve 16a by the controller 24 to close the flow control valve 16a, then the hydraulic motor 12a and the cooling fan 4a are stopped, and the cooling is performed only with the remaining cooling fans 4b and 4c, thus increasing the efficiency of the hydraulic pressure circuit. In this case, it is of course ensured that the stop signal 38 to stop the cooling fan 4a is produced only at a time when, when operation is switched over to the remaining two cooling fans 4b and 4c, the speed of each of the fans 4b and 4c will not exceed a maximum limit.

In the embodiment shown in Figure 7, the flow control valves 16a, 16b and 16c are provided in the downstream side hydraulic pressure supply lines 15a, 15b and 15c so that the speed of each of the cooling fans 4a, 4b and 4c can be independently controlled.

However, it commonly occurs in cooling towers that the cooling fans 4a, 4b and 4c are operated at almost the same speed to control the water temperature in the cooling tower as a whole.

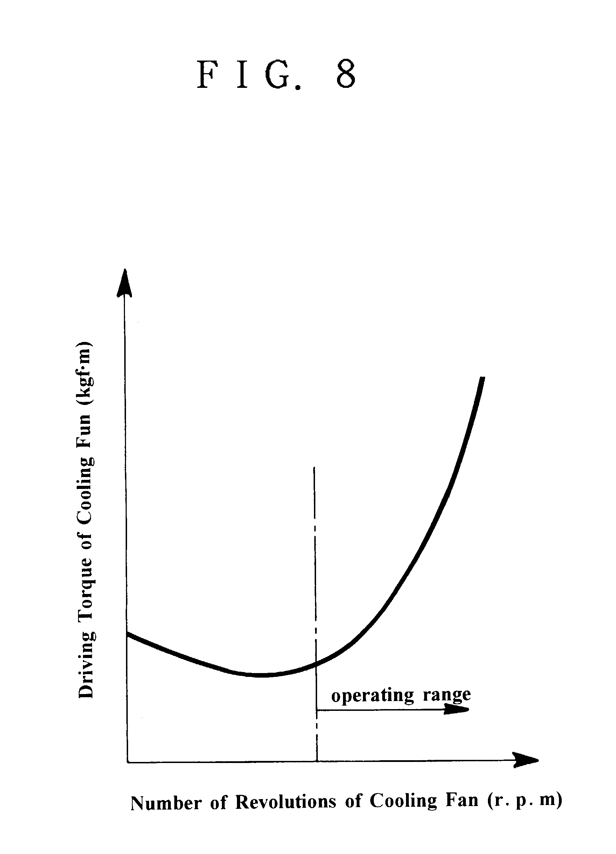

As shown in Figure 8, the properties of cooling fans are generally such that, when their number of revolutions per unit time, i.e. speed, increases in the normal operating range, the required driving torque also increases. When hydraulically driving and controlling the cooling fans 4a, 4b and 4c, the hydraulic supply pressure to the hydraulic motors 12a, 12b and 12c is theoretically in proportion to the driving torque of the cooling fans, and the liquid supply flow rate is in proportion to the speed of the cooling fans.

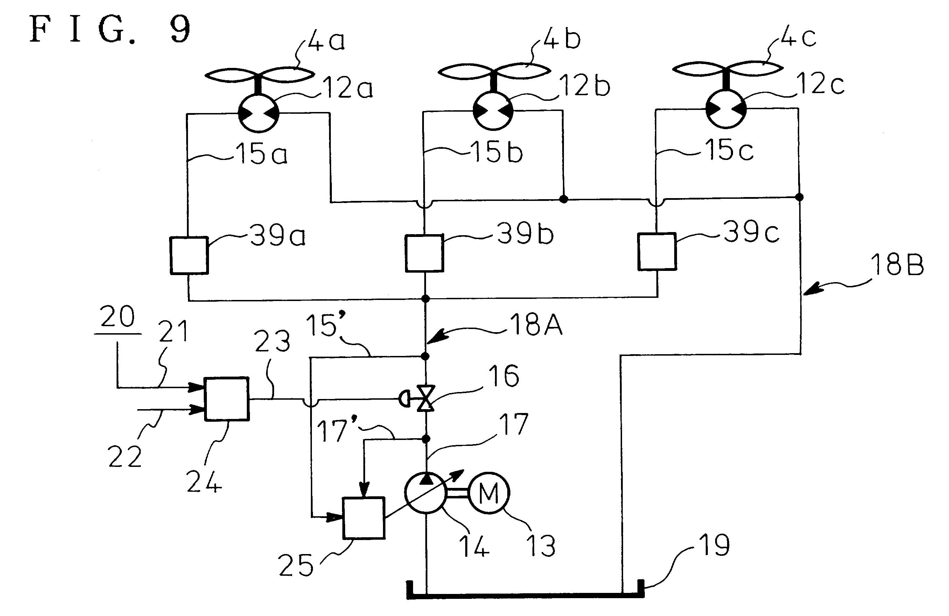

Figure 9 shows an embodiment in which a hydraulic system is provided which is more economical than that of Figure 7 by utilizing this property of the cooling fans 4a, 4b and 4c. A single flow control valve 16 is arranged in the upstream side hydraulic pressure supply line 17, and the pressure-compensated variable displacement regulator 25 is connected to the downstream and upstream sides of the flow control valve 16 via branch lines 15' and 17'. The supply line 18A is branched to form downstream side hydraulic pressure supply lines 15a, 15b and 15c at a point downstream of the branching point of the branch line 15'.

In the above arrangement, if the speed of one of the cooling fans 4a, 4b and 4c decreases due to variations in manufacturing conditions, the hydraulic supply pressure is naturally decreased. However, because the downstream side hydraulic pressure supply lines 15a, 15b and 15c of the hydraulic motors 12a, 12b and 12c communicate with each other, the hydraulic motors 12a, 12b and 12c are driven by the same supply pressure, i.e. by the same torque, and the reduced speed of the cooling fan is brought back to that of the other cooling fans. Thus supplying the motors at the same hydraulic supply pressure does not cause any substantial differences owing to the above-mentioned property of the cooling fans, i.e. the cooling fans can be operated without causing any substantial difference in their speed.

In the arrangement of Figure 9, electrically controlled shut-off valves 39a, 39b and 39c, such as electromagnetic valves, are installed in the downstream side hydraulic pressure supply lines 15a, 15b and 15c. When the speed of the cooling fans 4a, 4b and 4c decreases, one of the shut-off valves 39a, 39b or 39c can be operated to reduce the number of the hydraulic motors 12a, 12b and 12c in operation, whereby the remaining hydraulic motors and the associated cooling fans can be operated more efficiently.

## Claims

1. A cooling tower for cooling a liquid including a cooling fan (4) arranged to pass air through the cooling tower, a hydraulic motor (12) connected to operate the fan, a pump (14), which is operated by a motor (13) and is connected to the hydraulic motor via a hydraulic supply line (18A) which includes a flow control valve (16), a temperature detector (20) for detecting the temperature of the liquid cooled within the cooling tower, a controller (24) arranged to compare the detected temperature with a predetermined temperature and to control the flow control valve in dependence on the difference between the detected and predetermined temperatures, characterised in that the pump (14) is of variable capacity type and that a capacity regulator (25) is associated with the pump (14) and arranged to vary the capacity of the pump to maintain a predetermined pressure differential between the pressures on the upstream and downstream sides of the flow control valve.

2. A cooling tower as claimed in Claim 1 in which the regulator (25) includes capacity increasing biasing means (26) arranged to bias the pump in a direction which increases its capacity, an actuator (27) arranged to be actuated in a direction which reduces the capacity of the pump against the action of the biasing means (26) and a control valve (28) which controls the actuator (27) and has, at one end, a low pressure port (30) connected to the downstream side of the flow control valve (16) and a spring (31) arranged to add a force to the hydraulic pressure due to the port (30) and, at the other end, a high pressure port (32) connected to the upstream side of the flow control valve (16), the control valve (28) controlling the actuator (27) such that the pressure difference between the upstream and downstream sides of the flow control valve (16) is maintained in balance with the force of the spring (31).

3. A cooling tower as claimed in Claim 1 or 2 in which a normal-reverse switching valve (34) is provided across the hydraulic pressure supply line (18A) connected to the hydraulic motor (12) and the return line (18B).

4. A cooling tower as claimed in Claim 3 in which the flow control valve and the normal-reverse switching valves are integrated into a single unit (40).
